# EUROPÄISCHE PATENTSCHRIFT

(11) **EP 1 454 595 B1**
(45) Veröffentlichungstag und Bekanntmachung des Hinweises auf die Patenterteilung: **26.04.2006**
(21) Anmeldenummer: 04002992.8
(22) Anmeldetag: 11.02.2004
(51) Int. Cl.: A61C 1/14, A61C 3/06, B24B 45/00, B24D 7/16

(54) **Mandrell für Arbeitsscheiben**
Mandrel for working discs
Mandrin pour disques d'usinage

(30) Priorität: 06.03.2003 DE 20303657 U; 16.04.2003 DE 20306147 U; 28.07.2003 DE 20311608 U
(43) Veröffentlichungstag der Anmeldung: 08.09.2004
(73) Patentinhaber: Dental Forschung Schleicher GmbH, 93339 Riedenburg (DE)
(72) Erfinder: Schleicher, Wolfgang, 93339 Riedenburg (DE)
(74) Vertreter: Schneider, Andreas

(56) Entgegenhaltungen:
- EP-A- 0 147 545
- EP-A- 0 832 614
- WO-A-88/00029
- DE-A- 3 305 644
- DE-A- 10 039 446
- DE-A- 19 748 038
- US-A- 881 691
- US-A- 2 426 170

## Beschreibung

Die Erfindung bezieht sich auf ein Mandrell oder Aufspannelement für Arbeitsscheiben, d. h. insbesondere für Trennscheiben, Diamantscheiben, und/oder Polierscheiben gemäß Oberbegriff Patentanspruch 1.

Weiterhin bezieht sich die Erfindung auf eine Arbeitsscheiben-Mandrell-Kombination gemäß Oberbegriff Patentanspruch 10,

Arbeitsscheiben, insbesondere auch solche für eine Verwendung in der Dental-Technik sind in unterschiedlichsten Ausführungen, u.a. auch als Trennscheiben, Diamantscheiben oder Polierscheiben bekannt. Um derartige Arbeitsscheiben an eine rotierend angetriebene Aufnahme, beispielsweise an einem Spannfutter einer Arbeitsmaschine befestigen zu können, ist es erforderlich, die jeweilige Arbeitsscheibe zunächst an einem Mandrell oder Aufspannelement zu befestigen, welches im Wesentlichen aus einem mit der Maschinenaufnahme oder dem Spannfutter der Arbeitsmaschine verbindbaren Schaft und aus Mitteln zum lösbaren Befestigen der Arbeitsscheibe an einem Ende dieses Schaftes oder an einem dort gebildeten Kopfstück besteht. Diese Mittel zum lösbaren Befestigen der Arbeitsscheibe sind üblicherweise Spannmuttern oder Spannschrauben. Das Befestigen und Lösen einer Arbeitsscheibe an bzw. von dem Mandrell ist daher relativ zeitaufwendig, d. h. es werden hierfür üblicherweise etwa zwei Minuten benötigt.

Bekannt sind Mandrells bzw. Schnellspannvorrichtungen für Schleifscheiben (US 2,426,170 A1, EP 0 147 545 A1, DE 197 48 038 A1, US-881,691 und DE 100 39 446 A1). Allen diesen bekannten Einspannvorrichtungen ist gemeinsam, dass die jeweilige Schleifscheibe an einem Ende, vorzugsweise an dem zu einem Kopf verdickten Ende des Mandrellschaftes lösbar gehalten ist, und zwar unter Verwendung eines stiftförmigen Befestigungselementes, welches mit seinem Stiftschaft in einer axialen Bohrung des Mandrells durch Verrasten verankerbar ist und einen Kopf aufweist, sodass die Schleifscheibe zwischen diesem Kopf und dem betreffenden Ende des Mandrells eingespannt ist. Die Befestigung des Stihschaftes erfolgt im bekannten Fall z. B. durch Verrasten oder durch eine Art Schraubbefestigung. Hierfür ist der Stiftschaft mit federnden Rastnasen ausgebildet (US 881,691 A1) oder mit einer Art Gewinde ausgeführt (US 2,426,170 A1). Bekannt ist auch, dass das stiftartige Befestigungselement als Schraube ausgeführt und in ein Gewinde der Bohrung am Mandrell einschraubbar ist (DE 100 39 446 A1, DE 197 48 038 A1).

Weiterhin ist eine Eispannhalterung für Schleifscheiben bekannt, bei der das Ende des Mandrells gewindeartig ausgebildet ist und auf dieses Ende ein mutterartiges Befestigungselement aufgeschraubt werden kann (EP 0 147 545 A2). Bekannt ist schließlich auch eine spindelartige Aufspannhalterung für Schleifscheiben (WO 88/00029), bei der die jeweilige Schleifscheibe mit einem Kunststoffring, beispielsweise einem Ring aus einem thermoplastischen Kunststoff an einem Ende der Welle bzw. des Schaftes gehalten ist.

Aufgabe der Erfindung ist es, ein Mandrell aufzuzeigen, mit dem ein vereinfachtes und schnelles Befestigen und Lösen einer Arbeitsscheibe möglich ist. Zur Lösung dieser Aufgabe ist ein Mandrell entsprechend dem Patentanspruch 1 ausgebildet.

Aufgabe der Erfindung ist es weiterhin, eine Arbeitsscheiben-Mandrell-Kombination aufzuzeigen, die ein vereinfachtes und schnelles Befestigen sowie Lösen der Arbeitsscheibe an dem Mandrell ermöglicht. Zur Lösung dieser Aufgabe ist eine Kombination entsprechend dem Patentanspruch 10 ausgeführt.

Das erfindungsgemäße Mandrell ist vorzugsweise so ausgebildet, daß das Fixieren der Arbeitsscheibe am Mandrell mittels eines Raststiftes erfolgt, der einen Stift schafft und an einem Ende dieses Schaftes ein Kopfstück bildet und mit seinem Schaft in eine achsgleich mit der Mandrell-Längsachse ausgebildete Öffnung des Mandrells einführbar und dort verrastbar ist, so daß die Arbeitsscheibe zwischen dem Kopfstück des Stiftes und einer Anlagefläche des Mandrells aufgenommen ist, und zugleich drehsicher auf der Aufnahme des Mandrells sitzt.

Für eine verdrehungssichere Befestigung der Arbeitsscheibe weist das Mandrell eine Aufnahme auf, die einen von der Kreisform abweichenden Querschnitt besitzt und auf der die Arbeitsscheibe mit ihrer Befestigungsöffnung, die ebenfalls den von der Kreisform abweichenden Querschnitt aufweist, durch Aufschieben oder Aufsetzen formschlüssig befestigt werden kann.

Die Erfindung wird im Folgenden anhand der Figuren an einem Ausführungsbeispiel näher erläutert. Es zeigen:
- Figuren 1 und 2: ein Mandrell (Klickmandrell) zur Verwendung mit der Arbeitsscheibe in Seitenansicht sowie in Vorderansicht;
- Figuren 3 - 5: einen Klickstift des Mandrells der Figuren 1 und 2 in zwei unterschiedlichen Seitenansichten sowie in einer Ansicht von dem unteren Stiftende;
- Figur 6: eine Arbeitsscheibe in Draufsicht,
- Figur 7: die Arbeitsscheibe und das Mandrell in Seitenansicht;
- Fig. 8: eine weitere Ausführungsform des erfindungsgemäßen Mandrells in Seitenansicht, zusammen mit einer eingespannten Arbeits- oder Trennscheibe;
- Fig. 9 und 10: jeweils in Einzeldarstellung und in Seitenansicht den Befestigungsstift sowie das Kopfstück des Mandrells der Figur 8

Das in den Figuren allgemein mit 1 bezeichnete Mandrell dient zum Aufspannen von Arbeitsscheiben, beispielsweise von Trenn-, Diamant- und/oder Polierscheiben usw. für ihre Verwendung an einem nicht dargestellten Arbeitsgerät, beispielsweise an einem nicht dargestellten motorisch angetriebenen Spannfutter.

Das Mandrell 1 einstückig z.B. aus Metall oder einem anderen geeigneten Material gefertigt, und zwar mit einem Schaft 2 und einem Kopfstück 3, welches an einem Ende des Schaftes vorgesehen und ebenso wie der Schafft 2 rotationssymmetrisch zu einer Mandrell-Längsachse L ausgebildet ist. Der Schaft 2 und das Kopfstück 3 sind achsgleich miteinander angeordnet.

Im Kopfstück 3 ist eine an der dem Schaft 2 abgewandten Stirnseite 4 offene und achsgleich mit der Längsachse L ausgebildete Öffnung 5 vorgesehen. Weiterhin ist dort eine den Rand der Öffnung 5 umschließende Aufnahme 6 zur verdrehungssicheren Befestigung der jeweiligen Arbeitsscheibe gebildet. Die Aufnahme 6 ist von einem Vorsprung gebildet, der einen von der Kreisform abweichenden und an die Öffnung einer Arbeitsscheibe angepaßten Außendurchmesser besitzt.

Am Kopfstück 3 sind zwei einstückig mit diesem Kopfstück hergestellte blattfederartige Federabschnitte 7 gebildet, die beispielsweise durch Schlitzen oder Lasern aus dem Material des Kopfstückes 3 hergestellt sind. Diese Federabschnitte 7, die sich in Richtung der Längsachse L erstrecken, sind an ihrem der Stirnfläche 4 benachbarten Ende mit dem übrigen Kopfstück 3 verbunden und ragen mit ihrem anderen, der Stirnfläche 4 entfernt liegenden Federabschnittsende 7.1 in die Ausnehmung oder Öffnung 5 hinein.

Zum Fixieren der jeweiligen Trennscheibe am Kopfstück 3 dient ein Klickstift 8, der im Wesentlichen aus einem Schaft 9 mit einem Kopf 10 besteht. An seinem dem Kopf 10 entfernt liegenden Ende ist der Schaft 9 mit zwei Ausnehmungen 11 versehen, die ebenso wie die beiden Blattfederabschnitte 7 um 180° um die Längsachse L versetzt vorgesehen sind. Durch Einschieben des Schaftes 9 in die Öffnung 5 kann die jeweilige Arbeitsscheibe am Kopfstück 3 zwischen der dortigen Stirnfläche 4 und dem Kopf 10 gesichert werden, wobei eventuelle Differenzen in der Dicke der Arbeitsscheiben durch elastische Distanzscheiben ausgeglichen werden. Nachdem Einführen des Schaftes 9 in die Ausnehmung 5 rastet jeder blattfederartige Abschnitt 7 mit seinem Ende 7.1 in einer Ausnehmung 11 ein, so daß der Klickstift 8 im Mandrell 1 gesichert ist.

Durch Drehen des Klickstiftes 8 um 90° kann dieser entriegelt und dadurch die jeweilige Arbeitsscheibe vom Klickmandrell 1 abgenommen werden. Bei diesem Drehen gleitet das Ende 7.1 jedes Federabschnitts 7 federnd radial nach außen bewegt aus der Ausnehmung 11 auf den diese Ausnehmung nicht aufweisenden Teil des Schaftes 9, so daß dieser dann aus der Öffnung 5 herausgezogen werden kann.

Das Aufspannen und Entfernen der jeweiligen Arbeitsscheibe auf bzw. von dem Mandrell 1 ist in wenigen Sekunden möglich, während bisher dieses Aufspannen relativ zeitintensiv war.

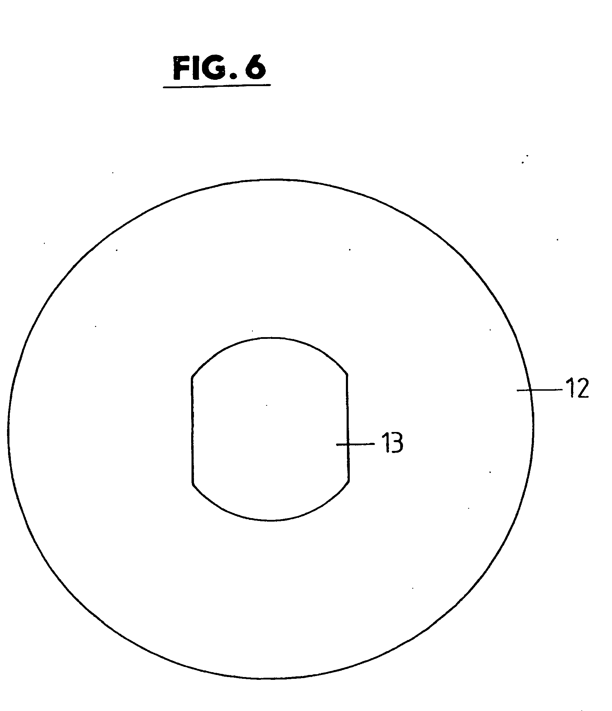

In der Figur 6 ist mit 12 die Arbeitsscheibe bezeichnet. Diese besitzt in der Mitte eine von der Kreisform abweichende Befestigungsöffnung 13, mit der die Arbeitsscheibe 12 auf die Aufnahme 6, die von dem über die Stirnfläche 4 wegstehenden Vorsprung gebildet ist, aufgesetzt werden kann. Die Querschnittsabmessungen und Querschnittsform der Öffnung 13 und der Aufnahe 6 sind identisch, so daß nach dem Aufsetzen die Aufnahme 6 formschlüssig in der Öffnung 13 aufgenommen ist.

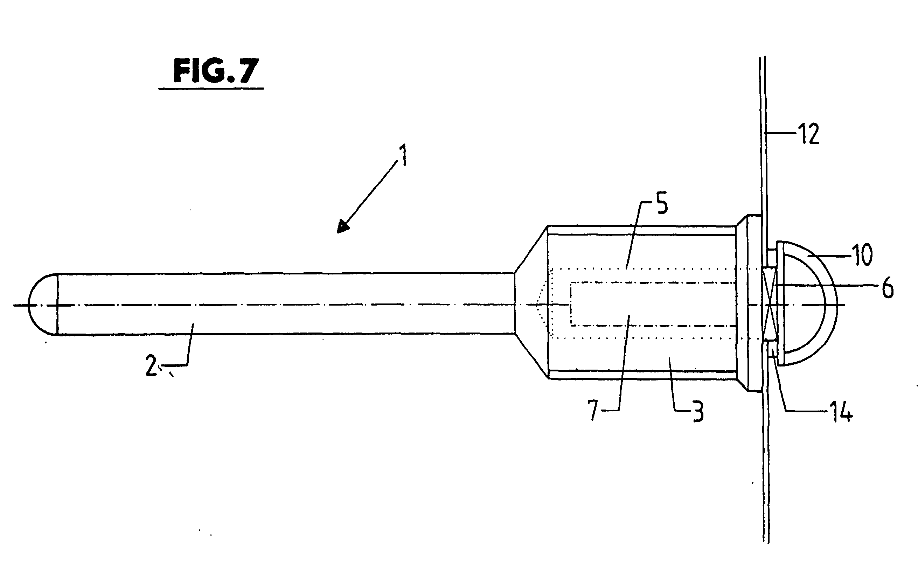

Die Figur 7 zeigt in vereinfachter Darstellung die am Mandrell 1 befestigte und auf der Aufnahme 6 sitzende Arbeitsscheibe 12. Diese ist zwischen der Stirnfläche 4 und einer zusätzlichen Scheibe oder einem Ring 14 eingespannt, der aus einem gummielastischen Material besteht und sich gegen den Kopf 10 abstützt. Im einfachsten Fall ist der Ring 14 beispielsweise ein O-Ring.

Anstelle von oder aber zusätzlich zu der Scheibe oder dem Ring 14 ist es auch möglich, den Kopf 10 an seiner dem Schaft 9 zugewandten Seite dauerelastisch auszubilden, beispielsweise durch eine entsprechende Beschichtung oder aber die Scheibe oder den Ring 14 fest am Stift 8 bzw. dessen Kopf 10 vorzusehen.

Weiterhin ist es auch möglich, die jeweilige Arbeitsscheibe 12 an wenigstens einer Seite im Bereich der Öffnung 13 mit einem diese Öffnung umschließenden ringartigen, dauerelastischen Element oder Auftrag, beispielsweise mit einem Ring oder einer Scheibe aus einem dauerelastischen Material zu versehen.

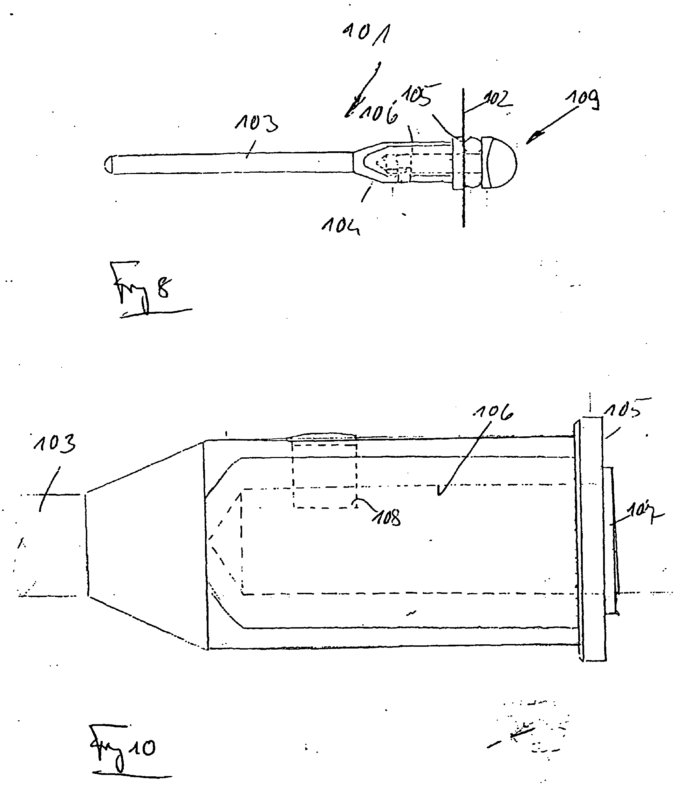

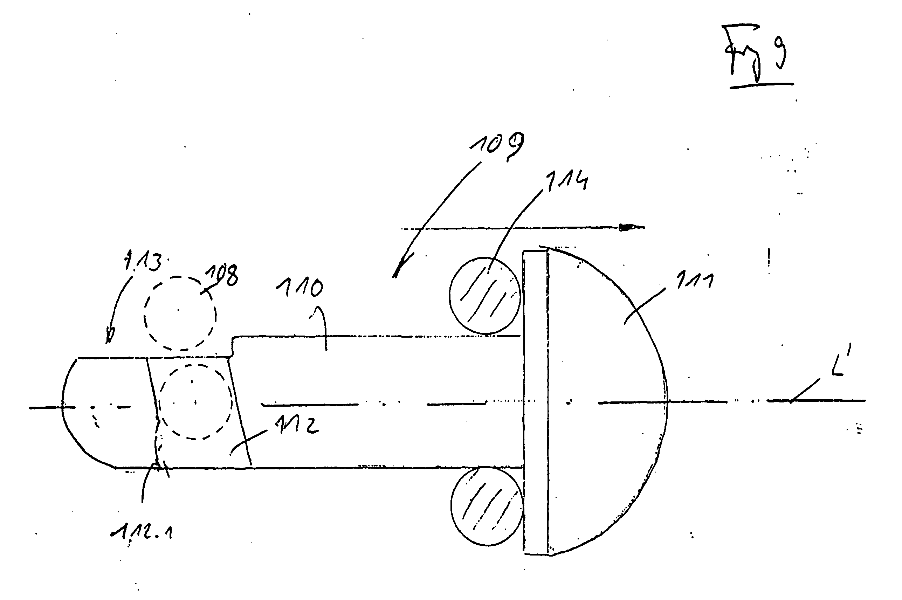

Das in den Figuren 8 - 10 allgemein mit 101 bezeichnete Mandrell dient zum Aufspannen von Arbeitsscheiben 102, beispielsweise zum Aufspannen von Trennscheiben 102 oder anderen Arbeitsscheiben, wie z. B. Diamant- und/oder Polierscheiben usw. für die Verwendung an einem nicht dargestellten Arbeitsgerät, beispielsweise an einem nicht dargestellten, motorisch angetriebenen Spannfutter.

Das Mandrell 101 besteht im wesentlichen aus einem Schaft 103 zum Einspannen in dem Arbeitsgerät sowie aus einem einstückig mit dem Schaft 103 hergestellten Kopfstück 104, welches an einem Ende des Schaftes vorgesehen und ebenso wie der Schaft 103 rotationssymmetrisch zu einer Mandrell-Längsachse L ausgebildet ist. Der Schaft 103 und das Kopfstück 104 sind weiterhin achsgleich miteinander angeordnet.

Im Kopfstück 104 ist eine an der dem Schaft 103 abgewandten Stirnseite 105 offene und achsgleich mit der Längsachse L ausgebildete Öffnung oder Bohrung 106 vorgesehen. Weiterhin ist dort eine den Rand der Öffnung 106 umschließende Aufnahme 107 zur verdrehungssicheren Befestigung der Arbeitsscheibe 102 ausgebildet. Die Aufnahme 107 ist von einem Vorsprung gebildet, der einen von der Kreisform abweichenden und an eine Öffnung in der Arbeitsscheibe 102 angepaßten Außendurchmesser besitzt. Am Kopfstück 104 ist weiterhin ein in die Öffnung 106 radial hineinragender Vorsprung 108 vorgesehen, der bei der dargestellten Ausführungsform von einem in das Kopfstück bzw. in eine dortige Bohrung eingesetzten und in geeigneter Weise verankerten Zapfen gebildet ist.

Zum Fixieren der Arbeitsscheibe 102 am Kopfstück 104 dient ein Befestigungsstift 109, der im wesentlichen aus einem Schaft 110 und mit einem über die Außenfläche des Schaftes radial wegstehenden Kopf 111 an einem Ende des Schaftes besteht. An seinem dem Kopf 111 entfernt liegenden Ende ist der am Schaft 110 an seinem Umfang mit einer zu diesem Umfang hin offenen Nut 112 versehen, die gewindegang- oder wendelartig zur Achse des Schaftes 110 verläuft und sich über einen Umfangsbereich kleiner als 360° um den Schaft 110 erstreckt, beispielsweise über einen Winkelbereich von etwa 180°. Ausgehend von dem freien Ende ist der Schaft 110 in einem Umfangsbereich mit einer Abflachung 113 oder mit einer entsprechenden Ausnehmung versehen, in die der Boden der Nut 112 an einem Ende dieser Nut übergeht. Die Breite der Nut 112 sowie der radiale Abstand des Bodens dieser Nut von der Längsachse L' des Befestigungsstiftes 109 sowie auch die Tiefe der Abflachung 113 sind so gewählt, daß beim Einstecken des Schaftes 110 in die an den Durchmesser dieses Schaftes angepaßte Öffnung 106 der Vorsprung 109 zunächst in der Abflachung 113 Platz findet und dann durch Drehen des Befestigungsstiftes 109 um seine Achse L'; die dann achsgleich mit der Achse L liegt, tritt der Vorsprung 108 in das offene Ende der Nut 112 ein, wobei beim weiteren Drehen durch den gewindeartigen Verlauf der Nut 112 der Kopf 111 des Befestigungsstiftes 109 axial in Richtung auf die Stirnfläche 105 des Kopfstückes 104 zu bewegt wird.

Auf dem Schaft 110 ist ein Ring 114 aus einem dauerelastischen Material, beispielsweise ein O-Ring angeordnet, der sich gegen die dem Schaft 110 zugewandte Seite des Kopfes 111 abstützt. Über diesen Ring 114 ist die jeweilige Arbeitsscheibe 102 dann bei am Kopfstück 104 befestigtem Befestigungsstift 109 gegen die Stirnfläche 105 angepreßt, d. h. die auf der Aufnahme 107 sitzende Arbeitsscheibe 102 ist dann zwischen der Stirnfläche 105 und dem Ring 114 eingespannt. Das Befestigen der Arbeitsscheibe 102 erfolgt in besonders einfacher Weise durch Einführen des Schaftes 110 in die Öffnung 106 und durch anschließendes Drehen des Befestigungsstiftes 109 um einen geringen Winkelbetrag, beispielsweise um einen Winkelbetrag von 90° oder etwas größer als 90°.

Durch entsprechendes Zurückdrehen des Befestigungsstiftes 109 und Entnehmen dieses Stiftes aus der Öffnung 106 ist ebenso ein schnelles Abnehmen der Arbeitsscheibe 102 möglich.

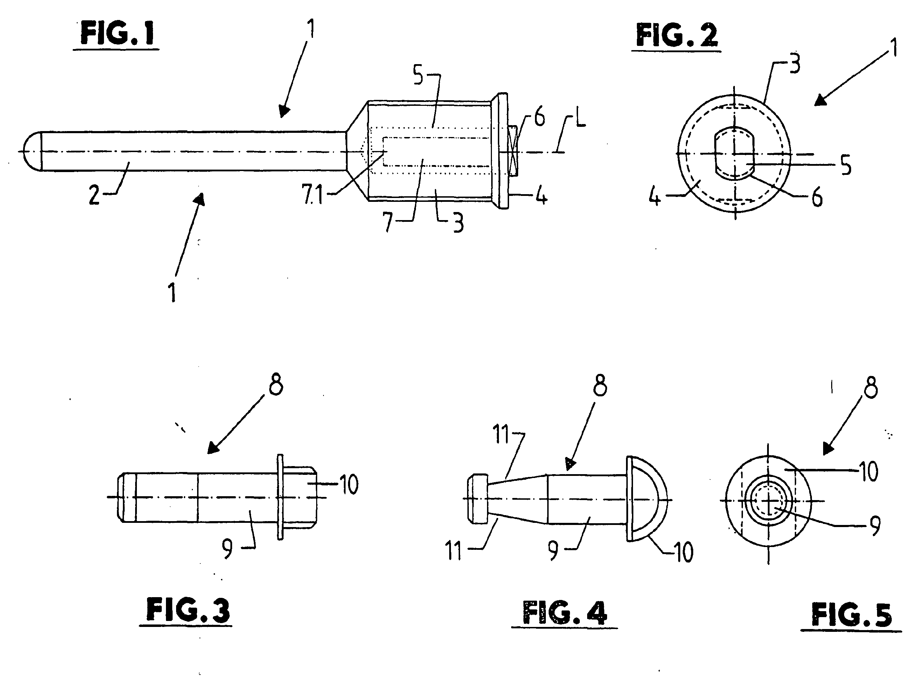

Grundsätzlich besteht die Möglichkeit, die Nut 112 so zu formen, daß der Vorsprung 108 im verriegelten Zustand an der Nut 112 federnd einrastet, wofür die Nut 112 beispielsweise mit einer seitlichen Ausnehmung oder Erweiterung versehen ist, wie dies mit 112.1 in der Figur 2 angedeutet ist.

### Bezugszeichenliste

- 101, 101a: Mandrell
- 102: Arbeitsscheibe
- 103: Schaft
- 104, 104a: Kopfstück
- 105: Stirnfläche
- 106: Mandrellöffnung
- 107, 107a: Vorsprung
- 108: Vorsprung
- 109, 109a: Befestigungsstift
- 110: Schaft
- 111: Kopf
- 112: Nut
- 112.1: seitliche Ausnehmung
- 113: Abflachung
- 114, 114a: elastischer Ring
- 115: elastischer Ring

- L, L': Längsachse

## Patentansprüche

1. Mandrell oder Aufspannelement für Arbeitsscheiben, beispielsweise bei Trenn-, Schleif- und/oder Polierscheiben, mit einem Schaft (2, 103) zum Befestigen des Mandrells an einer Aufnahme oder Spannvorrichtung einer Arbeitsmaschine sowie mit einem Befestigungselement (8, 109, 109a) in Form eines Stiftes (8, 109, 109a) mit einem Stiftschaft (9, 110) und einem Kopf (10, 111) zur wieder lösbaren Befestigung und zum Einspannen der Arbeitsscheibe zwischen einem Mandrellende und dem Kopf des Befestigungselementes (8, 109, 109a), wobei an dem einen Ende (3, 104, 104a) des Mandrells eine Öffnung (5, 106) für den Stiftschaft (9, 110) sowie Mittel für eine wieder lösbare Verankerung des Stiftschaftes (9, 110) in der Öffnung (5, 106) vorgesehen sind, **dadurch gekennzeichnet, daß** an der Stirn- oder Einspannfläche für die Arbeitsscheibe ein Vorsprung (6, 107) vorgesehen ist der einen von der Kreisform abweichenden Querschnitt besitzt zum formschlüssigen Eingriff in eine Befestigungsöffnung (13) der Arbeitsscheibe.

2. Mandrell nach Anspruch 1, **dadurch gekennzeichnet, daß** für die wieder lösbare Verankerung des Stiftes (8, 109, 109a) bzw. des Stiftschaftes (9, 110) Rastmittel (7, 11) und/oder ein Bajonettverschluß vorgesehen sind.

3. Mandrell nach Anspruch 1 oder 2, **dadurch gekennzeichnet, daß** das eine Ende des Mandrells von einem Kopfstück (3, 104, 104a) gebildet ist.

4. Mandrell nach einem der vorhergehenden Ansprüche, **dadurch gekennzeichnet, daß** die Rastmittel von wenigstens einem aus dem Material des Mandrells oder des Kopfstückes (3) geformten federnden Rastelement (7) und von wenigstens einer Ausnehmung (11) am Stiftschaft (9) gebildet sind.

5. Mandrell nach einem der vorhergehenden Ansprüche, **dadurch gekennzeichnet, daß** um die Mandrellachse (L) versetzt wenigstens zwei federnde Rastelemente (7) vorgesehen sind, und daß jedem Rastelement eine eine Gegenrast bildende Ausnehmung (11) am Stiftschaft (9) zugeordnet ist, und daß sich am Umfang des Stiftschaftes (9) in Umfangsrichtung die wenigstens eine Ausnehmung (11) sowie wenigstens ein Umfangsbereich des Schaftes (9) abwechseln, an dem der Schaft die die Gegenrast bildende Ausnehmung nicht besitzt.

6. Mandrell nach einem der vorhergehenden Ansprüche, **dadurch gekennzeichnet, daß** am Schaft (110) des Befestigungsstiftes (109, 109a) eine Nut (12) gebildet ist, die an einem Ende zum Einführen eines in der Öffnung (106) des Mandrells gebildeten Vorsprungs (108) offen ist.

7. Mandrell nach Anspruch 6, **dadurch gekennzeichnet, daß** der Zapfen des Befestigungsstiftes (109, 109a) eine von einem Ende dieses Zapfens ausgehende Ausnehmung oder Abflachung (113) zum Einführen des Vorsprungs in die Nut (112) aufweist, die beispielsweise an einer Seite eine Schrägfläche für den Vorsprung (108) bildet.

8. Mandrell nach einem der vorhergehenden Ansprüche, **dadurch gekennzeichnet, daß** die Nut (112) bezogen auf die Achse des Befestigungsstiftes (109, 109a) als Teillänge einer diese Achse umschließenden Wendel- oder Schraubenlinie ausgebildet ist.

9. Mandrell nach einem der vorhergehenden Ansprüche, **dadurch gekennzeichnet, daß** am Mandrell und/oder am Befestigungsstift (109, 109a) eine nachgiebige Anlage- oder Einspannfläche für die Arbeitsscheibe (102) gebildet ist, beispielsweise in Form wenigstens eines Rings oder O-Rings (114, 114a, 115) aus einem dauerelastischen Material.

10. Arbeitsscheiben-Mandrell-Kombination bestehend aus einem Mandrell (1) oder Aufspannelement nach einem der vorhergehenden Ansprüche und einer Arbeitsscheibe (12), beispielsweise Trenn-, Schleif- oder Polierscheibe, zur Verwendung an dem Mandrell (1) oder Aufspannelement, wobei die Arbeitsscheibe (12) zumindest in der Scheibenmitte eine Befestigungsöffnung (13) besitzt, die von einem Abschnitt des Mandrells durchgriffen wird, und wobei das Mandrell mit Spannflächen beidseitig gegen die Arbeitsscheibe (12) anliegt, **dadurch gekennzeichnet, daß** die Befestigungsöffnung (13) einen von der Kreisform abweichenden Querschnitt aufweist und von dem Vorsprung (6, 107) des Mandrells (1) formschlüssig durchgriffen wird.

11. Arbeitsscheiben-Mandrell-Kombinantion nach Anspruch 10, **dadurch gekennzeichnet, daß** die Befestigungsöffnung (13) einen Querschnitt besitzt, der durch zwei geradlinige, parallele Randlinien (13.1) sowie durch zwei diese beiden ersten Randlinien zu einem geschlossenen Rand verbindenden, gekrümmten Randlinien (13.2) definiert ist, und/oder daß die Scheibe an wenigstens einer Seite eine die Befestigungsöffnung (13) umschließendes ringartiges Element oder einen die Befestigungsöffnung (13) umschließenden ringartigen Abschnitt aufweist, der gummielastisch ausgebildet ist.

## Claims

1. A mandrel or clamping element for working discs, such as for cut-off, diamond and/or polishing discs with a shaft (2, 103) for affixing the mandrel to a retainer or clamping device of a machine and with a fixing element (8, 109, 109a) in the form of a pin (8, 109, 109a) with a pin shaft (9, 110) and a head (10, 111) for affixing and clamping the working disc in a detachable manner between one end of the mandrel and the head of the fixing element (8, 109, 109a), whereby at the one end (3, 104, 104a) of the mandrel, an opening (5, 106) for the pin shaft (9, 110) and means for anchoring the pin shaft (9, 110) in the opening (5, 106) are provided, **characterised in that** on the front surface or clamping surface for the working disc, a protrusion (6, 107) is provided, which has a profile which deviates from the circular form, and which penetrates an attachment opening (13) of the working disc with a positive fit.

2. A mandrel according to claim 1, **characterised in that** latching mechanisms (7, 11) and/or a bayonet lock are provided for the detachable anchoring of the pin (8, 109, 109a) or the pin shaft (9, 110).

3. A mandrel according to one of claims 1 or 2, **characterised in that** one end of the mandrel is formed by a head piece (3, 104, 104a).

4. A mandrel according to any one of the above claims, **characterised in that** the latching mechanisms are formed by at least one elastic latching element (7) which is produced from the same material as the mandrel or head piece (3), and by at least one recess (11) on the pin shaft (9).

5. A mandrel according to any one of the above claims, **characterised in that** at least two elastic latching elements (7) are fitted at an offset around the axis of the mandrel (L), and that a recess (11) on the pin shaft (9) which forms a counter-latching element is assigned to each latching element, and that on the circumference of the pin shaft (9) in the direction of the circumference, at least one recess (11) alternates with at least one circumference area of the pin (9) where the shaft does not have a recess which forms the counter-latching mechanism.

6. A mandrel according to any one of the above claims, **characterised in that** a groove (12) is formed on the shaft (110) of the fixing pin (109, 109a), which is open at one end for inserting a protrusion (108) formed at the opening (106) of the mandrel.

7. A mandrel according to claim 6, **characterised in that** the tappet of the fixing pin (109, 109a) comprises a recess or flattened surface (113) which runs from one end of this tappet for inserting the protrusion into the groove (112), which forms an angular surface for the protrusion (108) on one side, for example.

8. A mandrel according to any one of the above claims, **characterised in that** in relation to the axis of the fixing pin (109, 109a), the groove (112) is formed as a partial length of a spiral or helicoidal line which encompasses this axis.

9. A mandrel according to any one of the above claims, **characterised in that** a flexible support or clamping surface is formed for the working disc (102) on the mandrel and/or on the fixing pin (109, 109a), for example in the form of at least one ring or O-ring (114, 114a, 115) from a permanently elastic material.

10. A working disc-mandrel combination consisting of a mandrel (1) or clamping element according to any one of the above claims, and a working disc (12), such as a cut-off, diamond or polishing disc, for use on the mandrel (1) or clamping element, the working disc (12) having an attachment opening (13), at least in the centre of the disc, which is penetrated by a section (6, 107) of the mandrel, and the mandrel resting with its clamping surfaces (4, 13) on both sides against the working disc (12), **characterised in that** the attachment opening (13) comprises a profile which deviates from the circular form, and which is penetrated by the section (6) of the mandrel (1) with a positive fit.

11. A working disc according to claim 10, **characterised in that** the attachment opening (13) has a profile which is defined by two straight, parallel edge lines (13.1) and by curved edge lines (13.2) which link these first two edge lines to form a closed edge, and/or that the disc comprises on at least one side a ring-type element which encompasses the attachment opening (13), or a ring-type section which encompasses the attachment opening (13), which is made of a rubber elastic material.

## Revendications

1. Mandrin ou élément de serrage pour meules de travail, par exemple dans le cas de meules de tronçonnage, de rectification et/ou de polissage, avec un bras (2, 103) pour la fixation du mandrin sur un logement ou un dispositif de serrage d'une machine de travail, ainsi que avec un élément de fixation (8, 109, 109a) sous la forme d'une broche (8, 109, 109a) avec un bras de broche (9, 110) et une tête (10, 111) pour la fixation, pouvant être détachée de nouveau, et pour le serrage de la meule de travail entre une extrémité de mandrin et la tête de l'élément de fixation (8, 109, 109a), une ouverture (5, 106) pour le bras de broche (9, 110) ainsi que des moyens pour un ancrage, pouvant être détaché de nouveau, du bras de broche (9, 110) étant prévus dans l'ouverture (5, 106) à l'extrémité (3, 104, 104a) du mandrin, **caractérisé en ce que**, sur la surface frontale ou de serrage pour la meule de travail, une saillie (6, 107) est prévue, qui possède une section s'écartant de la forme circulaire et qui engrène mécaniquement dans une ouverture de fixation (13) de la meule de travail.

2. Mandrin selon la revendication 1, **caractérisé en ce que** pour un ancrage, pouvant être détaché de nouveau, de la broche (8, 109, 109a) ou du bras de broche (9, 110), des moyens d'encliquetage (7, 11) et/ou un verrouillage à baïonnette sont prévus.

3. Mandrin selon la revendication 1 ou 2, **caractérisé en ce que** l'extrémité du mandrin est constituée d'une pièce de tête (3, 104, 104a).

4. Mandrin selon une des revendications précédentes, **caractérisé en ce que** les moyens d'encliquetage sont constitués d'au moins un élément d'encliquetage (7) élastique formé du matériau du mandrin de la pièce de tête (3) et d'au moins un creux (11) sur le bras de broche (9).

5. Mandrin selon une des revendications précédentes, **caractérisé en ce qu'**il est prévu au moins deux éléments d'encliquetage (7) souples décalés autour de l'axe de mandrin (L) et **en ce que** un creux (11) formant un contre-cran sur le bras de broche (9) est affecté à chaque élément d'encliquetage, et ce que, sur la circonférence du bras de broche (9), et ce que, sur la circonférence du bras de broche (9), dans la direction circonférentielle, le creux (11), au moins au nombre de un, ainsi que au moins une zone circonférentielle du bras (9), sur laquelle le bras ne possède pas le creux formant le contre-cran, alternent

6. Mandrin selon une des revendications précédentes, **caractérisé en ce que**, sur le bras (110) de la broche de fixation (109, 109a), il est constitué une rainure (12) qui est ouverte à une extrémité pour l'introduction d'une saillie (108) constituée dans l'ouverture (106) du mandrin.

7. Mandrin selon la revendication 6, **caractérisé en ce que** le pivot de la broche de fixation (109, 109a) présente un creux ou un méplat (113) sortant d'une extrémité de ce pivot pour l'introduction de la saillie dans la rainure (112) qui forme par exemple sur un côté une surface oblique pour la saillie (108).

8. Mandrin selon une des revendications précédentes, **caractérisé en ce que**, par rapport à l'axe de la broche de fixation (109, 109a), la rainure (112) est constituée en tant que longueur partielle d'une ligne en hélice ou en spirale enfermant cet axe.

9. Mandrin selon une des revendications précédentes, **caractérisé en ce que**, sur le mandrin et/ou la broche de fixation (109, 109a), il est constitué une surface de butée ou de serrage souple pour la meule de travail (102), par exemple sous la forme d'au moins une bague ou un joint torique (114, 114a, 115) dans un matériau présentant une élasticité permanente.

10. Combinaison de meule de travail - mandrin, composée d'un mandrin (1) ou d'un élément de serrage selon une des revendications précédentes et d'un meule de travail (12), par exemple d'une meule de tronçonnage, de rectification ou de polissage, pour l'utilisation sur le mandrin (1) ou l'élément de serrage, la meule de travail (12) possédant au moins au milieu de la meule une ouverture de fixation (13) qui est traversée par un tronçon (6, 107) du mandrin, et le mandrin appuyant, par des surfaces de serrage (4, 13), de chaque côté contre la meule de travail (12), **caractérisé en ce que** l'ouverture de fixation (13) présente une section s'écartant de la forme cylindrique et est traversée mécaniquement par le tronçon (6) du mandrin (1).

11. Meule de travail selon la revendication 10, **caractérisée en ce que** l'ouverture de fixation (13) présente une section qui est définie par deux lignes marginales (13.1) rectilignes parallèles ainsi que par deux lignes marginales (13.2) courbes, raccordant ces deux premières lignes marginales en un bord fermé, et/ou **en ce que** la meule présente, sur au moins un côté, un élément annulaire enfermant l'ouverture de fixation (13) ou un tronçon annulaire enfermant l'ouverture de fixation (13), lequel tronçon présente l'élasticité du caoutchouc.
